# EUROPEAN PATENT APPLICATION

(11) **EP 4 852 434 A1**
(43) Date of publication of application: **09.12.2026**
(21) Application number: 25776722.8
(22) Date of filing: 25.03.2025
(51) Int. Cl.: H04N 19/593, H04N 19/105, H04N 19/176, H04N 19/139

(54) **METHOD AND APPARATUS FOR MATRIX-BASED INTRA PREDICTION ON BASIS OF VARIOUS REFERENCE PIXELS**

(30) Priority: 26.03.2024 KR 20240041177; 24.03.2025 KR 20250037374
(71) Applicant: Hyundai Motor Company, Seoul 06797 (KR); Kia Corporation, Seoul 06797 (KR)
(72) Inventor: CHOI, Jung Ah, Seoul 05338 (KR); HEO, Jin, Yongin-si Gyeonggi-do 16836 (KR); PARK, Seung Wook, Yongin-si Gyeonggi-do 16847 (KR)
(74) Representative: Isarpatent
(86) International application number: PCT/KR2025/003814
(87) International publication number: WO 2025/206716

(57) **Abstract**

Disclosed are a method and an apparatus for matrix-based intra prediction on the basis of various reference pixels. According to the disclosed method, it is possible to improve coding efficiency and prediction accuracy by using various reference pixels for MIP prediction.

## Description

### [Technical Field]

The present disclosure relates to a video encoding/decoding method, an apparatus, and a recording medium storing a bitstream, and more specifically, to a matrix-based intra prediction method and an apparatus based on various reference pixels.

### [Background]

The statements in this section merely provide background information related to the present disclosure and do not necessarily constitute prior art.

Assuming a large amount of data compared to voice data or still image data, video data unprocessed or uncompressed requires a lot of hardware resources, including memory, to store or transmit in its original form.

Accordingly, when storing or transmitting video data, an encoder typically serves to compress the video data to store or transmit it, and a decoder receives the compressed video data and performs decompression and reconstruction thereof. Such video compression technologies include H.264/AVC, High Efficiency Video Coding (HEVC), and Versatile Video Coding (VVC), which improves the coding efficiency of HEVC by about 30% or more.

However, due to the ever increasing size, resolution, and frame rate of videos, and the accordingly increased amount of data that needs to be coded, new compression technology is required to be more efficient in coding and more effective in improving video quality than existing compression technologies.

In particular, the demand for high-resolution, high-quality videos, such as high definition (HD) and ultra high definition (UHD) videos, has recently been increasing in various fields. As image data becomes higher resolution and higher quality, the amount of information or bits transmitted increases relative to existing image data. The increase in the amount of information or bits transmitted leads to an increase in transmission and storage costs. In addition, interest and demand for immersive media, such as virtual reality (VR), artificial reality (AR) content, and holograms, have recently increased, and the broadcasting of videos/images with characteristics different from real-world images, such as game footage, is increasing. Accordingly, a high-efficiency video compression technique is required to effectively compress, transmit, store, and play information from a high-resolution, high-quality video with the various characteristics mentioned above.

### [Disclosure]

### [Technical Problem]

The present disclosure provides a method and an apparatus for video encoding or decoding for efficiently encoding or decoding a video and improving the objective and subjective quality of a reconstructed video, and a recording medium storing a bitstream generated by the video encoding method/apparatus.

### [Technical Solution]

At least one aspect of the present disclosure provides a video decoding method including determining a reference template including decoded pixels, and determining a weight matrix and an offset for matrix-based intra prediction of a current block. The video decoding method also includes generating a prediction block of the current block based on the weight matrix, the offset and a reference template of the current block.

Another aspect of the present disclosure provides a video encoding method including determining a reference template including encoded pixels, and determining a weight matrix and an offset for matrix-based intra prediction of a current block. The video encoding method also includes generating a prediction block of the current block based on the weight matrix, the offset and a reference template of the current block.

Another aspect of the present disclosure provides a non-transient computer-readable recording medium storing a bitstream generated by a video encoding apparatus. The bitstream is generated by an video encoding method. The video encoding method includes determining a reference template including encoded pixels, and determining a weight matrix and an offset for matrix-based intra prediction of a current block. The video encoding method also includes generating a prediction block of the current block based on the weight matrix, the offset and a reference template of the current block.

Another aspect of the present disclosure provides a method performed by at least one processor. The method includes generating a bitstream for the video, and transmitting data including the bitstream. The generating of the bitstream includes determining a reference template including encoded pixels, and determining a weight matrix and an offset for matrix-based intra prediction of a current block. The generating of the bitstream also includes generating a prediction block of the current block based on the weight matrix, the offset and a reference template of the current block.

### [Advantageous Effects]

According to embodiments of the present disclosure, a video encoding/decoding apparatus may efficiently encode/decode a video and may improve the objective/subjective quality of a reconstructed video by diversifying reference pixels used for MIP prediction.

### [Brief Description of the Drawings]

FIG. 1 is a block diagram of a video encoding apparatus that may implement the techniques of the present disclosure.
FIG. 2 illustrates a method for partitioning a block using a quadtree plus binarytree ternarytree (QTBTTT) structure.
FIGS. 3A and 3B illustrate a plurality of intra prediction modes including wide-angle intra prediction modes.
FIG. 4 illustrates neighboring blocks of a current block.
FIG. 5 is a block diagram of a video decoding apparatus that may implement the techniques of the present disclosure.
FIG. 6 is a flowchart of a matrix-based intra prediction method according to an embodiment of the present disclosure.
FIG. 7A, FIG. 7B, and FIG. 7C each illustrates a reference template adjacent to a current block according to an embodiment of the present disclosure.
FIG. 8 illustrates a reference template not adjacent to a current block according to an embodiment of the present disclosure.
FIG. 9 illustrates a reference template indicated by motion information of a neighboring block according to an embodiment of the present disclosure.
FIG. 10 is a flowchart of a video encoding method according to an embodiment of the present disclosure.
FIG. 11 is a flowchart of a video decoding method according to an embodiment of the present disclosure.

### [Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure may be omitted for the purpose of clarity and for brevity.

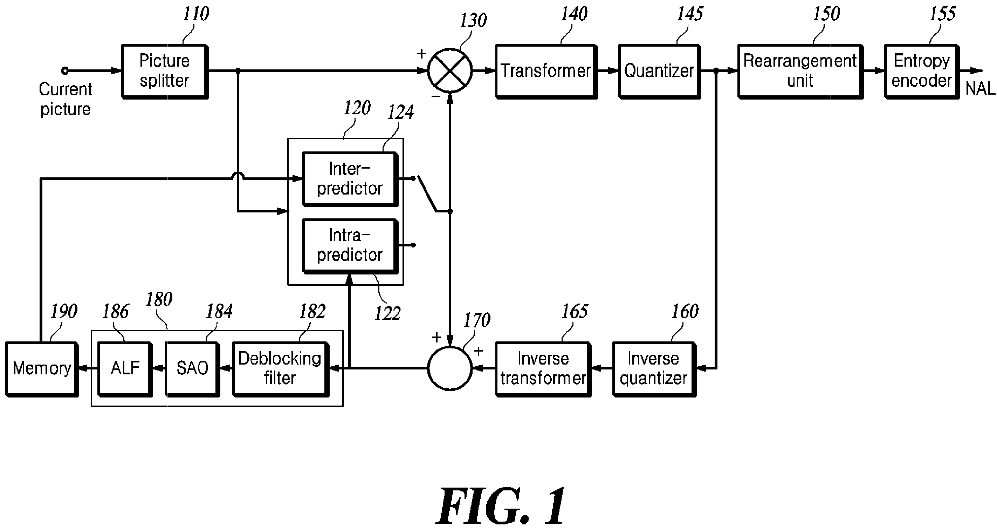

FIG. 1 is a block diagram of a video encoding apparatus that may implement technologies of the present disclosure. Hereinafter, referring to illustration of FIG. 1, the video encoding apparatus and components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each coding unit (CU) is encoded as a syntax of the CU, and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of a coding tree unit (CTU). Information on the size of the CTU (CTU size) is encoded as the syntax of the SPS or the PPS and delivered to a video decoding apparatus.

The picture splitter 110 splits each picture constituting the video into a plurality of coding tree units (CTUs) having a predetermined size and then recursively splits the CTU by using a tree structure. A leaf node in the tree structure becomes the coding unit (CU), which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternarytree (TT) in which the higher node is split into three lower nodes at a ratio of 1:2:1. The tree structure may also be a structure in which two or more structures among the QT structure, the BT structure, and the TT structure are mixed. For example, a quadtree plus binarytree (QTBT) structure may be used or a quadtree plus binarytree ternarytree (QTBTTT) structure may be used. Here, a binarytree ternarytree (BTTT) is added to the tree structures to be referred to as a multiple-type tree (MTT).

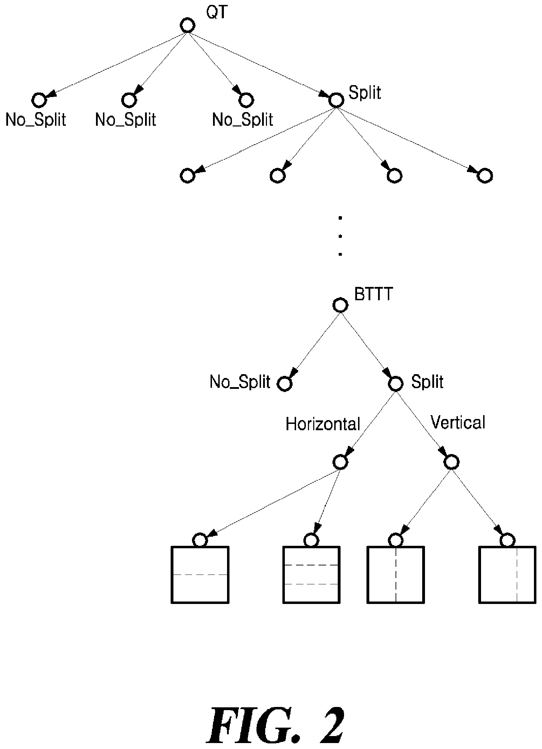

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks asymmetrical to each other may be additionally present. The asymmetrical form may include a form in which the block of the corresponding node is split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block." As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

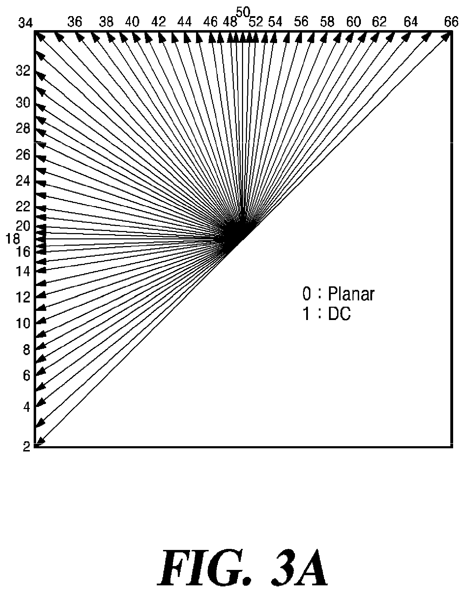

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 non-directional modes including a Planar mode and a DC mode and may include 65 directional modes. A neighboring pixel and an arithmetic equation to be used are defined differently according to each prediction mode.

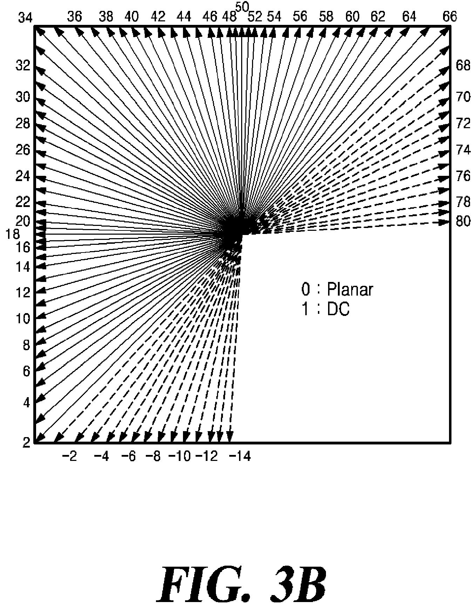

For efficient directional prediction for the current block having a rectangular shape, directional modes (intra prediction modes #67 to #80, #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and may also select an appropriate intra prediction mode to be used from tested modes. For example, the intra predictor 122 may calculate rate-distortion values by using a rate-distortion analysis for multiple tested intra prediction modes and may also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current block in the current picture and the prediction block in the reference picture. In general, motion estimation is performed for a luma component, and a motion vector calculated based on the luma component is used for both the luma component and a chroma component. Motion information including information on the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, and the like. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and including information on two motion vectors is delivered to the entropy encoder 155. Here, reference picture list 0 may be constituted by pictures before the current picture in a display order among pre-reconstructed pictures, and reference picture list 1 may be constituted by pictures after the current picture in the display order among the pre-reconstructed pictures. However, although not particularly limited thereto, the pre-reconstructed pictures after the current picture in the display order may be additionally included in reference picture list 0. Inversely, the pre-reconstructed pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

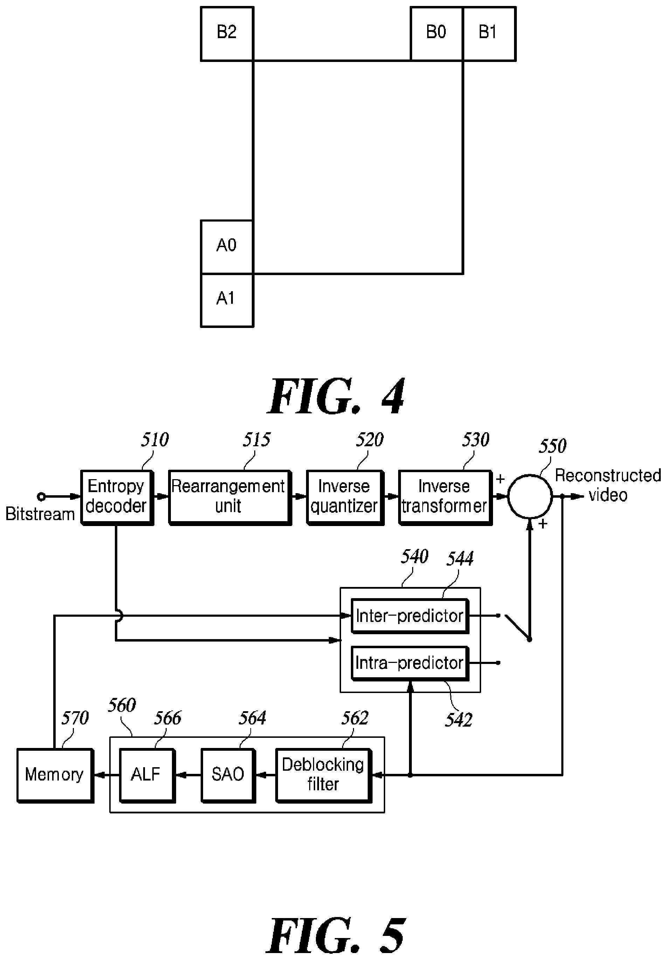

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

A merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, and the like) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and may perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and may transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to quantized transform coefficients arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information, such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to reconstruct the residual block.

The adder 170 adds the reconstructed residual block and the prediction block generated by the predictor 120 to reconstruct the current block. Pixels in the reconstructed current block may be used as reference pixels when intra-predicting a next-order block.

The loop filter unit 180 performs filtering for the reconstructed pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the reconstructed blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the reconstructed pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The reconstructed block filtered through the deblocking filter 182, the SAO filter 184, and the ALF 186 is stored in the memory 190. When all blocks in one picture are reconstructed, the reconstructed picture may be used as a reference picture for inter predicting a block within a picture to be encoded afterwards.

The video encoding device may store a bitstream of encoded video data in a non-transitory storage medium or transmit the bitstream to the video decoding device through a communication network.

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for reconstructing the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur, or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT is further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by reconstructing the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to reconstruct the residual signals and fills an area, which is not inversely transformed, with a value of "0" as the residual signals to generate a final residual block for the current block.

Further, when the MTS is applied, the inverse transformer 530 determines the transform function or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include an intra predictor 542 and an inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510, and predicts the current block by using the motion vector and the reference picture.

The adder 550 reconstructs the current block by adding the residual block output from the inverse transformer 530 and the prediction block output from the inter predictor 544 or the intra predictor 542. Pixels within the reconstructed current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the reconstructed blocks in order to remove the blocking artifact, which occurs due to block unit decoding. The SAO filter 564 and the ALF 566 perform additional filtering for the reconstructed block after the deblocking filtering in order to compensate differences between the reconstructed pixels and original pixels, which occur due to lossy coding. The filter coefficients of the ALF are determined by using information on filter coefficients decoded from the bitstream.

The reconstructed block filtered through the deblocking filter 562, the SAO filter 564, and the ALF 566 is stored in the memory 570. When all blocks in one picture are reconstructed, the reconstructed picture may be used as a reference picture for inter predicting a block within a picture to be encoded afterwards.

Hereinafter, an improved coding tool performed by the above-described video encoding apparatus or video decoding apparatus is disclosed. The embodiments below may be performed by an intra predictor 122 in the video encoding apparatus. Additionally, the embodiments below may be performed by an intra predictor 542 in a video decoding apparatus. In the present disclosure, an image processing apparatus refers to at least one of a video encoding apparatus or a video decoding apparatus.

The present disclosure relates to a matrix-based intra prediction (MIP) mode. An MIP mode is a mode that derives prediction samples of the current block by multiplying the reference pixels of the current block's neighboring reference template by a weight matrix.

A process of deriving the prediction sample of the current block in the MIP mode may be expressed as Equation 1. [Equation 1] $P \left(x, y\right) = {\sum }_{k} F \left(x, y, k\right) ∗ r \left(k\right)$

In Equation 1, P(x, y) represents the prediction sample of the current block, x and y represent the position of the prediction sample in the current block, r(k) represents the kth reference pixel of the current block, and F(x, y, k) represents the matrix weights corresponding to the prediction sample (x, y). k represents the index of the reference pixel in the reference template of the current block. The value of the prediction sample of the current block is determined by multiplication between the weight matrix of the current block and the reference pixel. The size of the prediction block of the current block is the same as the size of the current block.

The MIP mode may be activated or deactivated based on the size of the current block. The MIP mode may be activated for blocks of which the width and height are each less than or equal to predefined values. For example, the predefined value may be 32. The MIP mode may be used for block sizes of up to 32 in both width and height. The predefined value may be other values than 32. On the other hand, the MIP mode may not be activated for blocks of a certain size. For example, for blocks with width × height of 4×32, 32×4, 8×32, 32×8, the MIP mode may not be available.

The MIP mode may be activated or deactivated based on the intra prediction mode of the current block. For example, when the intra prediction mode number of the current block is 0, 1, or (2 + 2×k), the MIP mode may be activated. Here, k is an integer including 0. As another example, when the number of the intra prediction mode of the current block is 0, 1, or (2 + 4×k), the MIP mode may be activated.

The MIP mode may be activated or deactivated based on at least one of the size of the current block or intra prediction mode. The MIP mode may be activated for blocks of a preset size or less and preset intra prediction modes. As an example, when the width and height of the current block are 16 or less, and the intra prediction mode number of the current block is 0, 1, or (2 + 2×k), the MIP mode may be activated. Here, k is an integer including 0. As another example, when the width and height of the current block are 32 or less, and the intra prediction mode number of the current block is 0, 1, or (2 + 4×k), the MIP mode may be activated. Here, k is an integer including 0.

When the width or height of the current block is greater than 16, a 16×16 prediction block is generated using the MIP mode, and the prediction block of the current block may be generated by performing interpolation or bilinear interpolation on the 16×16 prediction block.

When the MIP mode is activated, the intra prediction mode of the current block is replaced by the MIP mode. In detail, the existing intra prediction mode or the derived intra prediction mode of the current block may be replaced by the MIP mode. Some directional intra prediction modes may be replaced by the MIP mode. Once it is determined whether the intra prediction mode and MIP mode of the current block are activated, the current block is predicted by the MIP mode without additional signaling.

In particular, the present disclosure provides a video coding method and apparatus for performing MIP prediction using various reference pixels. According to the present disclosure, various reference pixels are used for MIP prediction of the current block, so as not to limit the shape, position, and characteristics of the reference pixels. According to the present disclosure, the accuracy of intra prediction mode can be improved, and encoding and decoding efficiency can be enhanced. Furthermore, an offset may be used in MIP prediction according to the present disclosure.

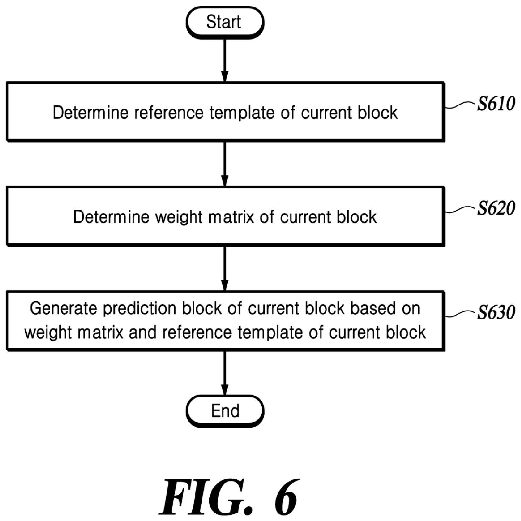

FIG. 6 is a flowchart of a matrix-based intra prediction method according to an embodiment of the present disclosure.

In step S610, the image processing apparatus determines the reference template of the current block.

The reference template refers to a set of pixels that were encoded or decoded before the current block.

The reference template may include pixels adjacent to the current block. For example, the reference template may include at least one reference line adjacent to the current block.

The reference template may include pixels that are not adjacent to the current block. For example, a reference template may include reference blocks that are not adjacent to the current block.

The reference template may include a reference area indicated by motion information of neighboring blocks of the current block. Motion information may be referred to as a motion vector or block vector.

The reference template may be specified in advance between the video encoding apparatus and the video decoding apparatus.

Alternatively, the reference template may be determined based on either signaling information or an intra prediction mode of the current block. Signaling information may include information on the shape, position, size, and the like of the reference template. For example, signaling information may include information for indicating a reference template including pixels adjacent to the current block, a reference template including non-adjacent pixels, or a reference template indicated using motion information of neighboring blocks.

The size of the reference template may be predefined. Alternatively, the size of the reference template may be determined based on at least one of the size of the current block or the size of the weight matrix. The size of the reference template may be determined based more on the intra prediction mode.

At least one of the pixels in the reference template may be a pixel generated from another pixel using at least one of padding or interpolation.

The image processing apparatus may adjust the reference template by performing a weighted sum of pixels in the reference template in units of predetermined shapes.

Information on whether to perform padding, interpolation, adjustment, or the like for the reference template may be specified or signaled between the video encoding apparatus and the video decoding apparatus.

In step S620, the image processing apparatus determines a weight matrix for matrix-based intra prediction of the current block. Furthermore, the image processing apparatus may determine the offset for matrix-based intra prediction.

The weight matrix may be derived based on at least one of the intra prediction mode or the size of the current block. As an example, the weight matrix of the current block may be selected from predefined weight matrices based on at least one of the size of the current block or the intra prediction mode. As another example, each element of the weight matrix of the current block may be derived based on at least one of the size of the current block or the intra prediction mode.

Alternatively, the weight matrix may be determined based on signaling information between the video encoding apparatus and the video decoding apparatus. Information to indicate the weight matrix of the current block may be signaled from predefined weight matrices.

An offset is a bias to adjust the result of matrix multiplication. The offset may be 0 or a real value. The offset may have the same value regardless of the positions of the prediction samples of the current block. Alternatively, the offset may have a different value for each position of prediction samples of the current block.

The offset may be a value selected from predefined values based on signaling information between the video encoding apparatus and the video decoding apparatus. Alternatively, the offset may be derived based on information on the current block or a neighboring block.

In step S630, the image processing apparatus generates a prediction block of the current block based on the weight matrix and the reference template of the current block. The offset may be further used to generate a prediction block of the current block.

A process of generating a prediction block of the current block may be expressed as Equation 2. [Equation 2] $P \left(x, y\right) = {\sum }_{k} F \left(x, y, k\right) ∗ r \left(k\right) + b \left(k\right)$

In Equation 2, b(k) represents the offset corresponding to the kth reference pixel. P(x, y) represents the prediction sample of the current block, x and y represent the position of the prediction sample in the current block, r(k) represents the kth reference pixel of the current block, and F(x, y, k) represents the matrix weights corresponding to the prediction sample (x, y). k represents the index of the reference pixel in the reference template of the current block. The value of the prediction sample of the current block is determined by multiplication between the weight matrix of the current block and the reference pixel. The size of the prediction block of the current block is the same as the size of the current block.

According to another embodiment of the present disclosure, a prediction block of the current block is generated through reduction, matrix multiplication, and up-sampling of the reference template.

Reference pixels are derived, and the reference pixels may be used for MIP prediction. Derivation of the reference pixel may include reduction, matrix computation, or up-sampling of the reference template.

First, the reference template is reduced by performing averaging or sampling on the pixels within the reference template. The reduced reference template may be in a vector or matrix form. Here, the number of pixels to which averaging is applied, the sampling rate, or the like may be specified between the video encoding apparatus and the video decoding apparatus.

Afterwards, a boundary vector is derived by multiplying the reduced reference template by one of the predefined matrices. The matrix used for computation may be selected from predefined matrices based on at least one of the size of the current block or the intra prediction mode.

By up-sampling the boundary vector, the prediction block of the current block is generated. For example, by interpolating the elements of the boundary vector, the prediction block of the current block may be derived.

Generation of a prediction block of the current block based on reduction and up-sampling of the reference template may be performed based on the fact that at least one of the size of the current block or the intra prediction mode is a predefined value. In other words, when at least one of the intra prediction mode or the size of the current block is within a predetermined range, the prediction block of the current block may be generated from reduction, matrix multiplication, and up-sampling of the reference template.

Alternatively, whether to generate a prediction block of the current block based on reduction and up-sampling of the reference template may be determined based on signaling information.

Likewise, the image processing apparatus can improve coding efficiency and prediction accuracy by using various reference templates for MIP prediction.

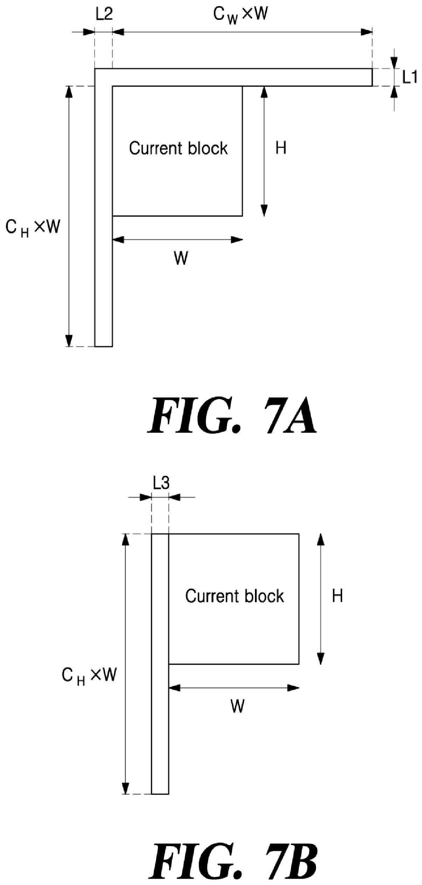

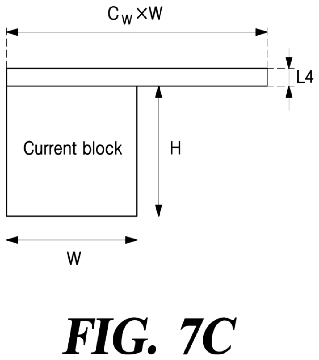

FIG. 7A, FIG. 7B, and FIG. 7C each illustrates a reference template adjacent to a current block according to an embodiment of the present disclosure.

Referring to FIGS. 7A, 7B, and 7C, the reference template may be one of an L-shaped reference template, a left reference template, or a top reference template.

In another embodiment, reference templates of various shapes may be used.

In FIG. 7A, the L-shaped reference template is shown.

The L-shaped reference template includes at least one reference line adjacent to the current block. In detail, the L-shaped reference template includes at least one left reference line, at least one top reference line, and at least one top left reference pixel.

In other words, the L-shaped reference template may include neighboring pixels to the left and top of the current block. In detail, the L-shaped reference template may include bottom left neighboring pixels, left neighboring pixels, top left neighboring pixels, top neighboring pixels, and top right neighboring pixels of the current block.

The size or area of the L-shaped reference template may be expressed as (C_{W}×W×L1)+(C_{H}×H×L2)+(L1×L2). Here, W is the width of the current block, H is the height of the current block, and C_{W} and C_{H} are weights for the width and height of the current block, respectively. L1 is the number of top reference lines, and L2 is the number of left reference lines. CW_{,} C_{H}, L1 and L2 are positive integers.

For example, the reference template may include a sample (L2 = 4) of the reconstructed line 4 neighboring the left of the current block, and a sample (L1 = 4) of the reconstructed line 4 neighboring the top of the current block. The width and height of the reference template may have values of 2W and 2H, respectively.

In FIG. 7B, the left reference template is shown.

The left reference template includes at least one left reference line adjacent to the current block. In other words, the left reference template includes left neighboring pixels of the current block. In detail, the left reference template includes the bottom left neighboring pixels and the left neighboring pixels of the current block. Furthermore, the left reference template may include top left neighboring pixels of the current block.

The size or area of the left reference template may be expressed as (C_{H}×H×L3). L3 represents the number of left reference lines.

In FIG. 7C, the top reference template is shown.

The top reference template includes at least one top reference line adjacent to the current block. In other words, the top reference template includes the top neighboring pixels of the current block. In detail, the top reference template includes the top neighboring pixels and the top right neighboring pixels of the current block. Furthermore, the top reference template may include top left pixels of the current block.

The size or area of the top reference template may be expressed as (C_{W}×W×L4). L4 indicates the number of top reference lines.

In FIGS. 7A, 7B, and 7C, the size of the reference template, that is, C_{W}, C_{H}, L1, L2, L3, and L4, may be determined by various schemes.

C_{W}, C_{H}, L1, L2, L3, and L4 may be specified in advance between the video encoding apparatus and the video decoding apparatus.

As an example, C_{W} and C_{H} may be 2, and L1, L2, L3 and L4 may be 4.

As another example, C_{W} and C_{H} may be 2, and L1, L2, L3 and L4 may be 2.

As another example, C_{W} and C_{H} may be 2, and L1, L2, L3 and L4 may be 1.

As another example, C_{W} and C_{H} may be 1, and L1, L2, L3 and L4 may be 1.

Alternatively, C_{W}, C_{H}, L1, L2, L3, and L4 may be determined based on the size of the current block. L1, L2, L3, and L4 may be selected from predefined values based on the size of the current block. Here, the predefined values may be 1, 2, or 4.

As an example, when the size of the current block is less than or equal to 16×16, C_{W} and C_{H} may be 2, and L1, L2, L3, and L4 may be 2.

As another example, when the width and height of the current block are greater than 16×16 and the width and height of the current block are less than or equal to 32×32, C_{W} and C_{H} may be 2, and L1, L2, L3, and L4 may be 1.

Alternatively, C_{W}, C_{H}, L1, L2, L3, and L4 may be determined based on at least one of the size of the current block or the size of the weight matrix. In the left reference template, when the size of the weight matrix is M×N, the height of the left reference template is N, and C_{H} may be the value obtained by dividing N by H.

As an example, when the size of the current block is less than or equal to 16×16, L3 may be 2.

Alternatively, C_{W}, C_{H}, L1, L2, L3, and L4 may be determined based on at least one of the intra prediction mode or the size of the current block.

As an example, when the size of the current block is less than or equal to 16×16 and the intra prediction mode of the current block is included in mode number 0, 1 or (2 + 2 × k), C_{W} and C_{H} are 2, and L1, L2, L3 and L4 may be 2. Here, k is 0 or a positive integer.

As another example, when the width and height of the current block are greater than 16×16, the width and height of the current block are less than or equal to 32×32, and the intra prediction mode of the current block is included in the mode number 0, 1 or (2 + 4 × k), C_{W} and C_{H} may be 2, and L1, L2, L3 and L4 may be 1. Here, k is 0 or a positive integer.

Alternatively, C_{W} and C_{H} may be determined based on the intra prediction mode. For example, for intra prediction modes 18 to 50, C_{W} and C_{H} may be set to 1. For the remaining intra prediction modes, C_{W} and C_{H} may be set to 2.

Meanwhile, the reference template adjacent to the current block may be determined by either an implicit method or an explicit method.

As an implicit method, the reference template may be determined based on the intra prediction mode replaced by the MIP mode. Various reference templates may be predefined or mapped to intra prediction modes. If the intra prediction mode is a predefined value or is included in a predefined range, a specific reference template may be used for MIP prediction. The relationship between the reference template and the intra prediction mode may be specified between the video encoding apparatus and the video decoding apparatus.

As an example, when the number of the intra prediction mode of the current block is 50, indicating the intra prediction mode in the vertical direction, the top reference template may be used for MIP prediction.

As another example, when the number of the intra prediction mode of the current block is 18, indicating the intra prediction mode in the horizontal direction, the left reference template may be used for MIP prediction.

As another example, when the number of the intra prediction mode of the current block is 34, indicating the intra prediction mode in the diagonal direction, the L-shaped reference template may be used for MIP prediction.

As another example, when the number of the intra prediction mode of the current block is 45, indicating the intra prediction mode in the diagonal direction, the entire top reference template and a top portion of the left reference template may be used.

As another implicit method, the reference template may be determined based on information other than the intra prediction mode.

As an explicit method, the reference template may be determined based on signaling information between the video encoding apparatus and the video decoding apparatus.

As an example, signaling information may include an index or flag for identifying the reference template of the current block from predefined reference templates. The reference template of the current block may be selected from predefined reference templates based on the signaling information.

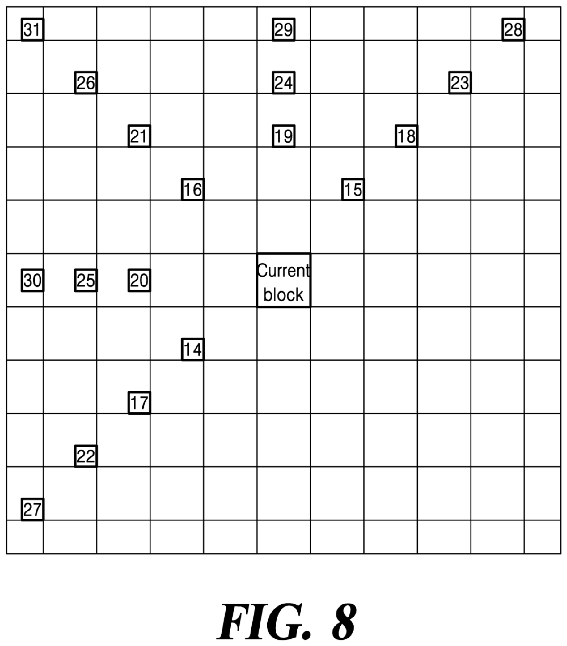

FIG. 8 illustrates a reference template not adjacent to a current block according to an embodiment of the present disclosure.

Non-adjacent neighboring blocks of the current block may be specified between the video encoding apparatus and the video decoding apparatus.

In FIG. 8, examples of non-adjacent neighboring blocks of the current block are shown. To predict the MIP of the current block, at least one of blocks 14 to 31 may be used as a reference template.

The number of each pixel indicates a non-adjacent neighboring block including the corresponding pixel. For example, a non-adjacent neighboring block including pixel number 14 may be referred to as block number 14. Pixels included in block number 14 are referred to as reference pixels of the current block.

In another embodiment, various non-adjacent neighboring blocks may be used. Various neighboring blocks may be used as a reference template depending on the position, size, number, or shape of non-adjacent neighboring blocks.

Non-adjacent neighboring blocks for MIP prediction of the current block can be predefined or derived.

As an example, the position, size, number, or shape of non-adjacent neighboring blocks may be specified in advance.

As another example, the position, size, number, or shape of non-adjacent neighboring blocks may be derived based on the size of the current block, the prediction mode thereof, or the like The video decoding apparatus may select non-adjacent neighboring blocks for MIP prediction from predefined non-adjacent neighboring blocks based on the size of the current block, the prediction mode thereof, or the like

As another example, the position, size, number, or shape of non-adjacent neighboring blocks may be derived based on signaling information. Signaling information may include a flag or index for specifying non-adjacent neighboring blocks.

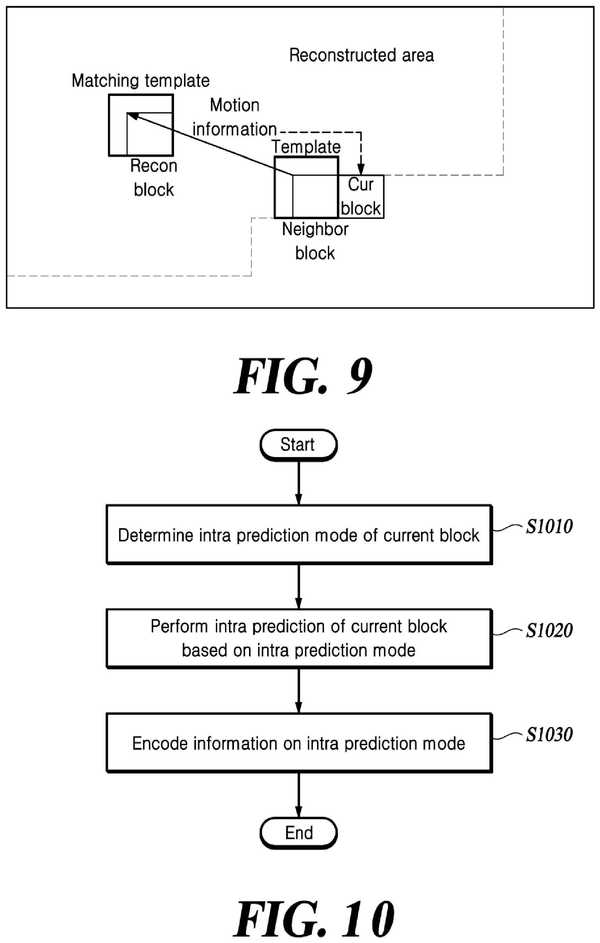

FIG. 9 illustrates a reference template indicated by motion information of a neighboring block according to an embodiment of the present disclosure.

In FIG. 9, the neighboring block adjacent to the left of the current block is a block predicted using a reconstructed block indicated by the motion information of the neighboring block in the current picture.

The reconstructed block may be determined using template matching when predicting a neighboring block. In detail, template matching means finding a template with a minimized difference from a template of a target block in a search area. The difference between the template of the target block and a template of any block in the search area is defined as a cost function. The template with the minimum cost is searched, and the block of the searched template is used as a prediction block of the target block. As a cost function, the sum of absolute differences (SAD), the sum of absolute transformed differences (SATD), the mean-removed sum of absolute differences (MR-SAD), a mean squared error (MSE), the sum of squared error (SSE) or the like may be used. For example, in FIG. 9, the difference between the template of the neighboring block and the template of the reconstructed block is the smallest, and the prediction block of the neighboring block may be the same as that of the reconstructed block. The reconstructed block is positioned at a distance equal to the motion information from the neighboring block and may have the same size as the neighboring block.

The motion information of the neighboring block may indicate the relative positional relationship between the reconstructed block and the neighboring block of the current block. The motion information of the neighboring block may be referred to as a block vector.

When the neighboring block has motion information, pixels at the position indicated by the motion information of the neighboring block or neighboring pixels of the indicated position may be used as a reference template for the current block.

In an example, as a reference template for the current block, a reconstructed block indicated by the motion information of the neighboring block based on the neighboring block in the current picture may be used.

In another example, as a reference template for the current block, a template of the reconstructed block indicated by the motion information of the neighboring block based on the neighboring block in the current picture may be used.

In another example, as a reference template for the current block, a block indicated by the motion information of the neighboring block based on the current block in the current picture may be used. Here, the size and direction of the motion information of the neighboring block are maintained, and the block indicated by the motion information of the neighboring block may be the right block of the reconstructed block.

In another example, as a reference template for the current block in the current picture, a template of a block indicated by the motion information of a neighboring block based on the current block may be used.

In another embodiment, a neighboring block of the current block may be predicted using a block indicated by the motion information of a neighboring block among reconstructed blocks in a reference picture different from the current picture.

The motion information of the neighboring block may indicate the positional relationship between the corresponding block of the neighboring block in the reference picture and the reconstructed block in the reference picture. The motion information of the neighboring block may indicate the relative positional relationship between the neighboring block in the current picture and the reconstructed block in the reference picture. The motion information of the neighboring block may be referred to as a motion vector.

The corresponding block of the neighboring block refers to a block with the same relative position as the neighboring block in the current picture among blocks in the reference picture. In other words, the position of the neighboring block in the current picture and the position of the corresponding block of the neighboring block in the reference picture are the same. Furthermore, the corresponding block of the current block refers to a block among the blocks within the reference picture that has the same position as the relative position of the current block in the current picture.

In an example, as a reference template for the current block, a block indicated by the motion information of the neighboring block relative to the corresponding block of the neighboring block in the reference picture may be used. The indicated block is a block positioned at a distance equal to the motion information from the corresponding block of the neighboring block.

In another example, as a reference template for the current block, a template of a block indicated by the motion information of the neighboring block relative to the corresponding block of the neighboring block in the reference picture may be used.

In another example, as a reference template for the current block, a block indicated by the motion information of the neighboring block based on the corresponding block of the current block in the reference picture may be used. Here, the size and direction of the motion information of the neighboring block are maintained. The block indicated by the motion information of the neighboring block may be the right block of the corresponding block of the reconstructed block.

In another example, as a reference template for the current block, a template of the block indicated by the motion information of the neighboring block based on the corresponding block of the current block in the reference picture may be used.

According to an embodiment of the present disclosure, if the reference template of the current block is not usable for MIP prediction, at least one pixel in the reference template may be generated from another pixel using at least one of padding or interpolation.

Specifically, if matrix computation is not possible due to a mismatch between the size of the reference template of the current block and the size of the weight matrix, or if a pixel in the reference template is not usable, or if the reference template spans a predetermined boundary, pixels for the reference template may be generated or replaced. For example, when the height of the reference template is smaller than the width of the weight matrix, the reference template may be expanded.

To generate a pixel of a reference template, padding, interpolation, vertical interpolation, horizontal interpolation, or vertical and horizontal interpolation may be used.

As an example, a reference template may be expanded by padding any pixel within the reference template into the reference template. Alternatively, a reference template may be padded using a predefined value or a value according to the bit depth.

As another example, a reference template may be expanded by interpolating one or more pixels in the reference template. Alternatively, a reference template may be expanded by interpolating neighboring pixels of the reference template. Alternatively, a reference template may be expanded by performing interpolation using pixels within the reference template and the neighboring pixels of the reference template.

As another example, unusable pixels in the reference template may be replaced by pixels generated by interpolating the neighboring pixels.

According to an embodiment of the present disclosure, the reference template of the current block may be adjusted by performing a weighted sum of pixels within the reference template in units of predetermined shapes. The adjusted reference template is used for MIP prediction of the current block.

The adjustment of the reference template may be expressed as Equation 3. [Equation 3] ${ref}_{adj} = {w}_{0} \times {ref}_{0} + {w}_{1} \times {ref}_{1} + ⋯ {w}_{n} \times {ref}_{n}$

In Equation 3, ref_{adj} is an adjusted reference template, w is a weight, and ref is a unit of a weighted sum performed in the reference template. The shape of refₙ may be a line or a block. The sum of the weights is 1.

As an example, a predetermined unit may be a line unit. When the reference template of the current block is a top reference template including a plurality of top reference lines, a weighted sum of a plurality of top reference lines in the vertical direction in the reference template may be performed. Here, the number of lines in the reference line after a weighted sum performed thereon is smaller than the number of lines in the plurality of top reference lines.

As another example, a predetermined unit may be an L-shape unit. When the shape of the reference template of the current block is an L-shape template, a weighted sum of L-shape reference lines in the reference template may be performed in L-shape units. A weighted sum of the top reference lines and left reference lines may be performed, and a weighted sum of the top left pixels of the current block may be performed. In Equation 3, ref₀ is an L-shaped reference line adjacent to the current block, and refₙ may be the L-shaped reference line furthest from the current block.

As another example, a predetermined unit may be a block unit. When the reference template of the current block includes non-adjacent neighboring blocks of the current block, a weighted sum of the non-adjacent neighboring blocks may be performed. The number of non-adjacent neighboring blocks after a weighted sum performed thereon is smaller than the number of non-adjacent neighboring blocks without a weighted sum performed thereon.

The position, order, size, or direction of a predetermined unit for adjusting the reference template may vary. For example, a weighted sum of the top reference lines in the horizontal direction may be performed.

The reference template may be adjusted for a portion of the reference template. In other words, the adjusted reference template may be the result of a weighted sum of a portion of blocks or a portion of the lines the existing reference template.

Information for adjusting a reference template may be specified or signaled between the video encoding apparatus and the video decoding apparatus. Information for adjusting a reference template may include whether to adjust the reference template, units for a weighted sum, the position, size, number, or direction of weighted sum of reference lines or reference blocks in the reference template.

FIG. 10 is a flowchart of a video encoding method according to an embodiment of the present disclosure.

In step S1010 of FIG. 10, the video encoding apparatus determines the intra prediction mode of the current block.

It may be determined that the MIP mode is the optimal intra prediction mode.

In step S1020, the video encoding apparatus performs intra prediction for the current block based on the intra prediction mode.

If the intra prediction mode is the MIP mode, the video encoding apparatus performs MIP prediction for the current block. MIP prediction may be performed using the methods described in FIGS. 6 to 9.

In step S1030, the video encoding apparatus encodes information on the intra prediction mode.

The information on the intra prediction mode may include information on the use of MIP, and information on reference templates, matrices, offsets, and the like used for MIP prediction.

The information on the use of MIP may include an MIP constraint flag (MIP_constraint_flag) and an MIP flag. The MIP flag may be an MIP enable flag (MIP_enabled_flag) or an MIP disable flag (MIP_disabled_flag). Setting the MIP constraint flag to 0 indicates that there are no constraints on MIP prediction. The MIP enable flag or the MIP disable flag may be set to 0 or 1. On the other hand, if the MIP constraint flag is set to 1, the MIP enable flag is set to 0 and the MIP disable flag is set to 1.

The information on the use of MIP may be signaled independently at a higher or lower level, or signaled dependently on other syntax elements.

As an example, the information on the use of MIP may be signaled at a higher level, such as in a video parameter set (VPS), sequence parameter set (SPS), picture parameter set (PPS), picture header (PH), or slice header (SH).

As another example, the information on the use of MIP may be signaled at a lower level, such as in a coding tree unit (CTU), coding unit (CU), prediction unit (PU), or transform unit (TU). The use of MIP is controlled in units of blocks.

As another example, information on the use of MIP is not be signaled by an explicit flag, but may be signaled dependently based on the size of the current block or flags of other prediction modes or the like. The video decoding apparatus may determine the MIP mode based on the size of the current block or flags of other prediction modes or the like.

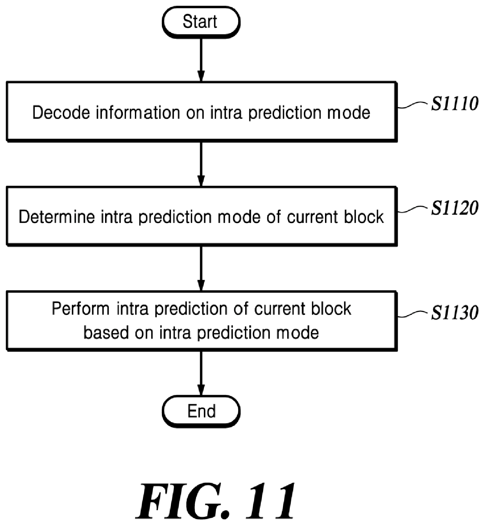

FIG. 11 is a flowchart of a video decoding method according to an embodiment of the present disclosure.

In step S1110 of FIG. 11, the video decoding apparatus decodes information on the intra prediction mode of the current block.

The information on the intra prediction mode may include information on the use of MIP, and information on reference templates, matrices, offsets, and the like used for MIP prediction.

In step S1120, the video decoding apparatus determines the intra prediction mode of the current block based on the information on the intra prediction mode. Here, the intra prediction mode may be the MIP mode.

In step S1130, the video decoding apparatus performs MIP prediction for the current block. MIP prediction may be performed using the methods described in FIGS. 6 to 9.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in the present disclosure are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium may include, for example, various types of recording devices in which data is stored in a form readable by a computer system. For example, the non-transitory recording medium may include storage media, such as erasable programmable read-only memory (EPROM), flash drive, optical drive, magnetic hard drive, and solid state drive (SSD) among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which the present disclosure pertains should understand that the scope of the present disclosure should not be limited by the above explicitly described embodiments but by the claims and equivalents thereof.

### CROSS-REFERENCE TO RELATED APPLICATIONS

This application claims priority to and the benefit of Korean Patent Application No. 10-2024-0041177 filed on March 26, 2024, and Korean Patent Application No. 10-2025-0037374 filed on March 24 2025, the entire contents of each of which are incorporated herein by reference.

## Claims

1. A video decoding method, comprising:
determining a reference template including decoded pixels;
determining a weight matrix for matrix-based intra prediction of a current block; and
generating a prediction block of the current block based on the weight matrix and a reference template of the current block.

2. The video decoding method of claim 1, wherein the reference template includes pixels adjacent to the current block among the decoded pixels.

3. The video decoding method of claim 2, wherein the reference template is determined based on either signaled information or an intra prediction mode of the current block.

4. The video decoding method of claim 1, wherein the reference template includes, among the decoded pixels, pixels that are not adjacent to the current block.

5. The video decoding method of claim 1, wherein the reference template includes a reference area indicated by motion information of a neighboring block of the current block.

6. The video decoding method of claim 1, wherein at least one of the pixels in the reference template is generated from another pixel using at least one of padding or interpolation.

7. The video decoding method of claim 1, further comprising:
adjusting the reference template by performing a weighted sum of pixels within the reference template in units of predetermined shapes.

8. The video decoding method of claim 1, wherein generating the prediction block of the current block comprises:
reducing the reference template based on the fact that at least one of an intra prediction mode or the size of the current block is a predefined value;
generating a boundary vector by multiplying one of predefined matrices by the reduced reference template; and
generating a prediction block of the current block by up-sampling the boundary vector.

9. The video decoding method of claim 1, wherein the size of the reference template is determined based on at least one of the size of the current block or the size of the weight matrix.

10. The video decoding method of claim 1, wherein the prediction block of the current block is generated based further on an offset for matrix-based intra prediction of the current block.

11. A video encoding method, comprising:
determining a reference template including encoded pixels;
determining a weight matrix for matrix-based intra prediction of a current block; and
generating a prediction block of the current block based on the weight matrix and a reference template of the current block.

12. A method for transmitting data including a bitstream for a video, the method comprising:
generating a bitstream for the video; and
transmitting data including the bitstream,
wherein the generating of the bitstream comprises:
determining a reference template including encoded pixels;
determining a weight matrix for matrix-based intra prediction of a current block; and
generating a prediction block of the current block based on the weight matrix and a reference template of the current block.
